# DEMANDE DE BREVET EUROPEEN

(11) **EP 0 762 394 A1**
(43) Date de publication de la demande: **12.03.1997**
(21) Numéro de dépôt: 96401462.5
(22) Date de dépôt: 02.07.1996
(51) Int. Cl.: G11B 7/085

(54) **Dispositif de positionnement d'un bloc de lecture et/ou d'écriture d'informations sur un disque**

(30) Priorité: 01.09.1995 FR 9510314
(71) Demandeur: FILLONY LIMITED, Wan Chai (HK)
(72) Inventeur: Takahashi, Hiroshi, Taikoo Shing (HK)
(74) Mandataire: Plaçais, Jean-Yves

(57) **Abrégé**

Un lecteur comprend des moyens de pilotage (40) propres à déplacer sur des moyens de guidage (2), en fonction d'ordres reçus d'une unité de gestion de disques (41), un bloc optique (3) muni d'une tête de lecture et/ou d'écriture (4) entre deux disques (5-i) comprenant chacun une zone de lecture et/ou d'écriture (ZL) délimitée par un début (DZ) et une fin (FZ) de zone. Le dispositif comprend également des moyens de détection (16-18, 23, 24, 27, 37, 38) propres à signaler aux moyens de pilotage (40) le passage du bloc (3) en au moins deux lieux de passage (47-i, 48-i) associés respectivement au positionnement de la tête (4) en regard sensiblement de la fin de zone (FZ) et d'une région intermédiaire (RI) de la zone de lecture et/ou d'écriture (ZL) de chaque disque. Les moyens de pilotage (40) sont aptes à faire varier la vitesse de déplacement du bloc (3) en fonction du lieu de passage détecté et des ordres reçus, ce qui permet de minimiser le temps nécessaire au bloc pour passer d'une plage d'informations de l'un des disques à une plage d'informations de l'autre disque.

## Description

L'invention concerne un dispositif de positionnement d'un bloc muni d'une tête de lecture et/ou d'écriture d'informations sur un disque, en particulier pour les lecteurs de disques optiques du type connu sous la désignation "Compact Disc".

Un tel disque comprend une zone de lecture et/ou d'écriture délimitée par un début et une fin de zone, le début de zone étant placé le plus près du centre du disque et comprenant une table des matières contenant par exemple des informations relatives au nombre de plages d'informations contenues dans la zone de lecture et/ou d'écriture, et à leur durée.

L'invention s'applique plus particulièrement aux lecteurs à double chargement, dans lesquels l'utilisateur positionne un premier disque sur un premier support horizontal appartenant à un premier tiroir, puis un second disque sur un second support horizontal appartenant à un second tiroir.

Dans le cas d'un lecteur à tiroirs, les supports horizontaux constituent les faces inférieures desdits tiroirs, lesquels peuvent sortir du lecteur par un mouvement horizontal.

Une fois les disques placés et les tiroirs rentrés à l'intérieur du lecteur, une unité de gestion des disques ordonne la mise en rotation d'un premier support tournant, formant tourne-disque, qui a pris en charge le premier disque. Puis cette unité ordonne à des moyens de pilotage de positionner le bloc de lecture et/ou d'écriture du lecteur en dessous de la table des matières au premier disque, afin que ledit bloc puisse lire les informations qu'elle contient.

Le bloc est installé sur des moyens de guidage solidaires du châssis du lecteur et propres à autoriser son déplacement entre les premier et second disques.

Lorsque l'unité de gestion a fini de mémoriser les informations contenues dans la table des matières du premier disque, elle ordonne aux moyens de pilotage d'effectuer la lecture de la table des matières du second disque, ce qui nécessite la mise en rotation d'un second support tournant, formant tourne-disque, puis le positionnement du bloc de lecture et/ou d'écriture en dessous de la table des matières du second disque.

Ce positionnement doit être le plus rapide possible afin que l'utilisateur puisse sélectionner la plage de son choix sur l'un des disques, alors que l'autre disque est en cours de lecture, en perdant un minimum de temps.

Le déplacement du bloc s'effectuant à grande vitesse, lorsque celui-ci arrive en butée à l'extrémité des moyens de guidage, cela génère de fortes contraintes qui peuvent entraîner une détérioration à la fois de la structure de guidage et du bloc, et donc diminuer notablement les performances du lecteur, lesquelles dépendent notamment de la précision du positionnement du bloc.

Dans les dispositifs actuels, lorsque l'utilisateur désire écouter une plage choisie du second disque alors qu'il écoute le premier disque, il faut tout d'abord positionner la tête de lecture au début de la zone de lecture du second disque, puis rechercher la plage choisie, ce qui nécessite la lecture accélérée de toutes les plages placées avant celle-ci.

Lorsque le numéro de la plage choisie est supérieur à la moitié du nombre total de plages de la zone de lecture, le positionnement du bloc (ou temps d'accès) est très long. Le confort de l'utilisateur est par conséquent réduit.

Le but de l'invention est de remédier à tout ou partie des inconvénients ci-dessus.

L'invention vise notamment un dispositif du genre défini en introduction, et comprenant des moyens de détection logés dans le châssis et propres à signaler aux moyens de pilotage le passage du bloc en au moins un premier et un second lieux de passage associés respectivement au positionnement de la tête de lecture et/ou d'écriture en regard sensiblement de la fin de zone et d'une région intermédiaire de la zone de lecture et/ou d'écriture de chaque disque, ladite région intermédiaire étant comprise entre le début et la fin de zone. Par ailleurs, les moyens de pilotage sont aptes à faire varier la vitesse de déplacement du bloc en fonction du lieu de passage détecté et d'ordres reçus de l'unité de gestion des disques.

Cela permet aux moyens de pilotage de minimiser le temps nécessaire au bloc de lecture et/ou d'écriture pour passer d'une plage d'informations de l'un des disques à une plage d'informations de l'autre disque.

Ainsi, lorsque l'unité de gestion connaît le contenu des tables des matières de chaque disque, il est possible d'immobiliser le bloc au niveau de l'un des lieux de passage, puis de rechercher ladite plage choisie, sans avoir nécessairement besoin de retourner au début de la zone de lecture et/ou d'écriture. Le temps d'accès à une plage est ainsi notablement réduit.

De plus, dans certaines conditions d'utilisation, comme par exemple lorsque l'unité de gestion ne connaît pas la table des matières du second disque, il est possible de ralentir la vitesse de déplacement du bloc après détection du passage de celui-ci devant l'un des lieux de passage, et notamment le second lieu, pour éviter que le bloc soit arrêté brusquement par une butée, alors qu'il est au maximum de sa vitesse.

Préférentiellement, l'invention prévoit que les moyens de détection sont propres à signaler le passage du bloc en un troisième lieu de passage associé au positionnement de la tête de lecture en regard d'une région de chaque disque, comprise entre la région intermédiaire et le début de zone de la zone de lecture et/ou d'écriture.

De façon particulièrement avantageuse, la région intermédiaire est située à une distance du centre d'un support tournant comprise entre 34 mm et 44 mm.

De la sorte, il est possible d'utiliser le dispositif selon l'invention dans des lecteurs destinés à lire des disques d'au moins deux formats standards, comme par exemple ceux de 80 mm et 120 mm de diamètre.

Mais, l'invention peut également s'appliquer à d'autres formats de disques grâce à la détection du passage du bloc au premier lieu de passage (fin de zone de lecture d'un disque de format 12 cm), ou en d'autres lieux de passage si besoin est.

Selon une autre caractéristique de l'invention, les moyens de détection comprennent une pluralité de capteurs de position sensiblement alignés selon une droite parallèle aux moyens de guidage et disposés respectivement en regard d'au moins un lieu de passage, et au moins un actionneur propre à coopérer avec les capteurs de position pour permettre la détection du passage du bloc devant le lieu en regard duquel il se trouve.

Les moyens de détection peuvent être soit de type mécanique, soit de type émetteur-récepteur, soit encore de type mixte. On peut, par exemple, détecter de façon mécanique et signaler par émission d'un signal électrique ou par voie d'ondes.

Préférentiellement, les moyens de détection comprennent en outre une pluralité de circuits électriques chacun connectés d'une part à une unité de détection, elle même connectée aux moyens de pilotage, et d'autre part à l'un des capteurs de position.

Le signalement du passage relevé par un capteur est ainsi traduit en signal électrique, de type courant ou tension, qui sera transmis, via le circuit électrique qui lui est associé, à l'unité de détection qui préviendra à son tour les moyens de pilotage, lesquels agiront en conséquence.

Dans un mode de réalisation préférentiel, les capteurs de position sont des leviers à bascule comportant de première et seconde extrémités, chaque levier formant interrupteur de l'un respectif des circuits électriques et étant apte à pivoter de l'une à l'autre de deux positions comprenant une position passive dans laquelle ledit levier est au repos et le circuit électrique associé est ouvert, et une position active dans laquelle le levier possède une seconde extrémité en contact électrique avec une borne électrique du circuit auquel il est connecté, lequel circuit est alors fermé, et l'actionneur est un ergot formant saillie, solidaire d'une face inférieure ou latérale du bloc, sensiblement parallèle aux moyens de guidage, et propre à coopérer par contact mécanique avec une première extrémité d'un levier pour faire passer celui-ci de la position passive à la position active, ou inversement.

Dans ce mode de réalisation, la détection est assurée de façon mécanique par coopération entre le bloc, par l'intermédiaire d'un ergot, et un levier formant interrupteur. Ainsi, lorsque le levier est forcé dans son état actif, il ferme le circuit auquel il appartient, ce qui provoque le passage d'un courant électrique, ou une variation de la tension détectée au niveau des moyens de détection.

Avantageusement, les leviers à bascule sont respectivement montés à rotation libre autour d'axes directement ou indirectement solidaires du châssis, et sont chacun sollicités vers la position passive par un organe de rappel.

Ainsi, le retour de la position active à la position passive est automatique, ce qui autorise une nouvelle détection quasi-instantanément.

Selon encore une autre caractéristique de l'invention, l'unité de gestion des disques est propre, en cas de connaissance du nombre de plages d'informations de chaque disque et d'une plage choisie à lire sur un disque donné, autre que celui en cours de lecture, à adresser aux moyens de pilctage des instructions leur indiquant de déplacer le bloc et de l'immobiliser juste après le second lieu de passage du disque donné.

Dans ce cas, les tables des matières des deux disques sont connues. Le bloc de lecture peut être arrêté au niveau du second lieu de passage (près du centre d'un disque de format 12 cm). La recherche de la plage choisie par l'usager peut alors commencer à partir de ce second lieu de passage.

A cet effet, après immobilisation du bloc juste après le second lieu de passage du disque donné, les moyens de pilotage sont aptes à commander le sens de déplacement dudit bloc en fonction d'une comparaison entre le numéro de la plage du second disque en regard de la tête de lecture et/ou d'écriture et le numéro de la plage choisie, de sorte que la direction de déplacement du bloc optique puisse être déterminée en vue du positionnement de la tête de lecture et/ou d'écriture en regard de la plage choisie.

Selon encore une autre caractéristique de l'invention, l'unité de gestion des disques est propre, en cas de connaissance d'une plage choisie à lire sur un disque donné, autre que celui en cours de lecture, et de non connaissance du nombre de plages d'informations dudit disque donné, à adresser aux moyens de pilotage des instructions contenant un premier ordre de ralentir la vitesse de déplacement du bloc juste après détection du passage de celui-ci devant ledit second lieu de passage du support tournant contenant le disque donné et un second ordre d'arrêter le bloc juste après détection du passage de celui-ci devant ledit troisième lieu de passage du support tournant contenant le disque donné.

Dans ce second cas, le premier disque est en cours de lecture et la table des matières du second disque n'est pas connue. Il est donc obligatoire de se rendre au troisième lieu de passage du second support tournant, lequel correspond au positionnement de la tête de lecture en début de zone, afin d'y lire la table des matières. Cela permet d'effectuer ensuite la recherche de la plage choisie par l'utilisateur.

Par ailleurs, le fait de pouvoir ralentir la vitesse de déplacement du bloc avant qu'il n'atteigne la butée à l'extrémité des moyens de guidage, permet d'éviter qu'il soit brutalement immobilisé. Cela supprime de nombreuses contraintes au dispositif de positionnement de la tête de lecture qui doit être le plus précis possible.

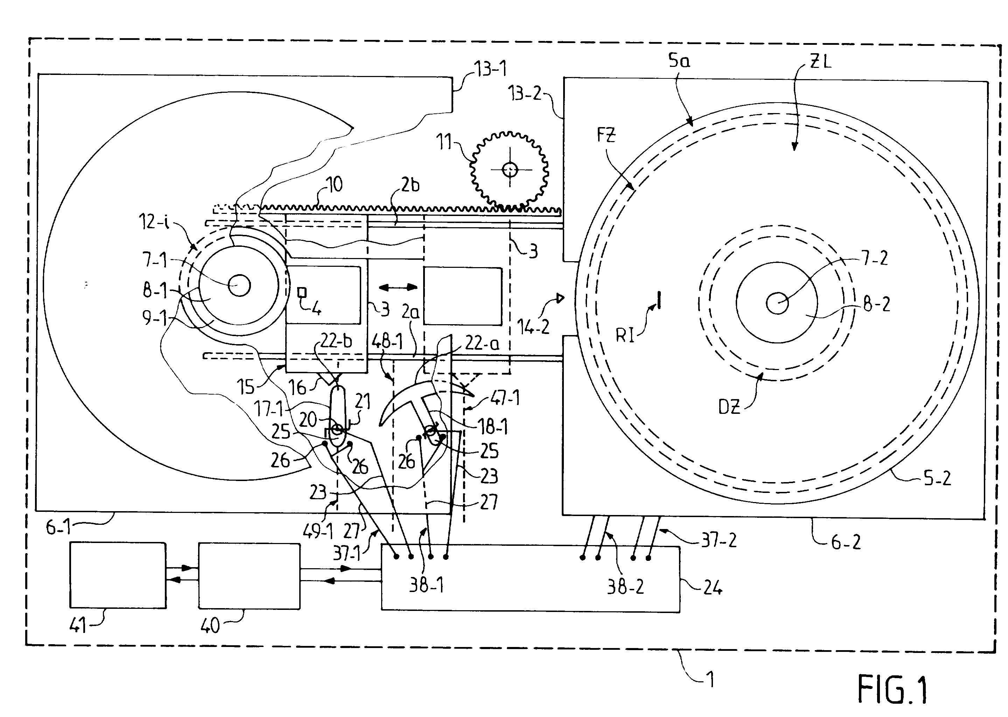

D'autres caractéristiques et avantages de l'invention apparaîtront à l'examen de la description détaillée qui va suivre, faite à titre d'exemple, et du dessin annexé, sur lequel la figure est un schéma, partiellement arraché, d'un lecteur équipé du dispositif de positionnement selon l'invention, dans un mode de réalisation préférentiel.

Le lecteur de Compact Disc partiellement illustré sur la figure comprend un châssis 1 sur la face inférieure duquel sont fixés deux rails 2a et 2b. Ces deux rails sont parallèles deux à deux et servent de moyens de guidage à un bloc optique 3.

Ce bloc 3 est muni d'une tête de lecture 4 destinée à lire des informations stockées sur la face inférieure 5a d'un Compact Disc 5.

Le lecteur comprend, de façon connue, de premier 6-1 et second 6-2 plateaux récepteurs sur lesquels on peut respectivement poser manuellement de premier 5-1 et second 5-2 disques à lire. Chaque disque 5-i est positionné, par exemple grâce à des moyens de centrage prévus sur le plateau récepteur 6-i, de façon que son axe vertical coïncide avec un axe vertical 7-i. Chaque plateau 6-i appartient par exemple à un tiroir qui peut sortir du lecteur par un mouvement de translation axial pour le dépôt ou le retrait manuel du disque, et rentrer dans le lecteur, muni du disque, pour venir occuper la position illustrée sur la figure.

Lorsqu'un tiroir est totalement rentré à l'intérieur du lecteur, un support tournant 8-i, formant tourne-disque associé à ce tiroir, vient prendre en charge le disque 5-i qui repose sur le plateau récepteur 6-i. Le tourne-disque 8-i est muni d'un plateau horizontal 9-i s'étendant radialement vers l'extérieur et destiné à supporter le disque 5-i par contact avec une partie de sa face inférieure 5a-i.

Chaque tourne-disque 8-1 et 8-2 est respectivement installé à l'une des deux extrémités des rails 2a et 2b, et centré entre celles-ci. Le bloc optique 3 qui est installé sur ces rails peut se déplacer en translation, et horizontalement, du premier tourne-disque 8-1 vers le second tourne-disque 8-2, ou inversement, selon la position en cours du bloc optique 3.

Les plateaux récepteurs 6-1 et 6-2 sont logés au-dessus des rails 2a et 2b et comprennent une ouverture centrale 12-i dont le diamètre est plus grand que celui du plateau horizontal 9-i du tourne-disque 8-i et qui est relié à un bord libre 13-i du plateau récepteur 6-i par une encoche radiale 14-i à bords parallèles aux deux rails 2a et 2b.

Le bloc optique 3 peut ainsi se déplacer horizontalement sur les rails 2a et 2b de façon que la tête de lecture 4 soit en regard de la face inférieure 5a-i du disque 5-i et parcoure un rayon de celle-ci.

Ce mouvement de translation horizontal sur les rails de guidage est obtenu au moyen d'une crémaillère 10 solidaire du bloc 3, coopérant avec une roue dentée 11 entraînée en rotation par un moteur (non représenté sur la figure).

Le bloc 3 comprend sur une face latérale 15 parallèle aux rails de guidage 2, un ergot 16 formant saillie, destiné à actionner des leviers à bascule dont il sera question plus loin.

Mais, cet ergot peut être prévu sur une autre face, comme par exemple la face inférieure du bloc 3.

Comme indiqué ci-dessus, le dispositif selon l'invention comprend deux paires de premiers 18-i et seconds 17-i leviers à bascule respectivement montés à rotation libre autour d'axes 20-i, solidaires du châssis 1, de part et d'autre d'un axe contenu dans le plan des rails 2 et passant entre les deux disques à égale distance de leurs centres respectifs.

Ainsi, au premier disque 5-1 on associe les deux leviers à bascule 17-1 et 18-1, et au second disque 5-2 on associe les deux leviers à bascule 17-2 et 18-2 (non représentés sur la figure).

Bien entendu, dans un autre mode de réalisation, ces leviers peuvent faire partie d'un boîtier solidaire du châssis 1.

Les leviers à bascule sont maintenus au repos autour de leur axe de rotation 20 par un organe de rappel 21, de type ressort hélicoïdal, dans une position dite "passive" dans laquelle la partie centrale axiale du levier est sensiblement perpendiculaire aux rails 2a et 2b.

Chacun de ces leviers comprend une partie centrale terminée par de première 22 et seconde extrémités 25. La première extrémité 22 est sensiblement en regard de la face latérale 15 munie de l'ergot 16, et destinée à coopérer avec celui-ci.

Chaque premier levier 18-i est installé en regard à la fois de premier 47-i et second 48-i lieux de passage associés respectivement au positionnement de la tête de lecture 4 du bloc optique 3 en regard de la fin de zone de lecture FZ et d'une région intermédiaire RI de la zone de lecture ZL.

La région intermédiaire RI d'un disque est située à une distance comprise entre 34 mm et 44 mm du centre du tourne-disque qui le supporte, et de préférence à 36 mm, ce qui correspond au voisinage du milieu de la zone de lecture ZL d'un Compact Disc de 120 mm de diamètre, ou au voisinage de la fin de la zone de lecture d'un Compact Disc de 80 mm de diamètre.

Ces premiers leviers comprennent une première extrémité 22-a perpendiculaire à leur partie centrale, positionnée au repos sensiblement parallèlement à la ligne qui matérialise le trajet de l'ergot 16, et de forme sensiblement allongée et arrondie afin de coopérer avec l'ergot 16 de la face latérale 15 sur toute la distance qui sépare les premier 47 et second 48 lieux de passage. Ainsi, lorsque l'ergot 16 se dirige d'un premier lieu de passage 47 vers un second lieu de passage 48, il entraîne en rotation la première extrémité du premier levier à bascule en regard duquel il se déplace, ce qui provoque la transition dudit levier de son état passif à un état actif qui sera défini plus loin. Le premier levier 18-i est alors maintenu dans son état actif pendant toute la durée du déplacement du bloc optique entre les premier 47 et second 48 lieux de passage. Le dépassement de ce second lieu de passage entraîne le retour du premier levier 18-i à son état passif, lorsque le déplacement s'effectue de la fin de zone FZ vers le début de zone DZ, et inversement le passage du premier levier 18-i à son état actif, lorsque le déplacement s'effectue du début de zone DZ vers la fin de zone FZ.

Bien entendu, si l'ergot est prévu sur la face inférieure du bloc 3, les premières extrémités 22-a des premiers leviers à bascule 18-i sont logées entre et en dessous des rails de guidage 2, sensiblement parallèlement à ceux-ci.

De même, de nombreux autres modes de réalisation peuvent être envisagés pour cette première extrémité 22-a, pourvu que chaque mode autorise la coopération décrite ci-avant.

Chaque second levier 17-i est installé en regard d'un troisième lieu de passage 49 associé au positionnement de la tête de lecture 4 du bloc optique 3 en regard du début de zone de lecture DZ.

Ces seconds leviers 17-i comprennent, à l'une des extrémités de leur partie centrale, une première extrémité 22-b positionnée au repos sensiblement sur la ligne qui matérialise le trajet de l'ergot 16, afin de coopérer ponctuellement avec celui-ci.

Ainsi, lorsque l'ergot 16 atteint le troisième lieu de passage 49, il entraîne en rotation la première extrémité 22-b du second levier à bascule 17-i en regard duquel il se trouve, ce qui provoque la transition dudit levier de son état passif à un état actif qui sera défini plus loin.

Ce second levier 17-i peut être également réalisé sous la forme d'une simple lame conductrice flexible formant interrupteur.

Lorsque tous les premiers et seconds leviers sont en position passive, leurs premières extrémités 22 respectives sont sensiblement alignées sur une droite virtuelle parallèle aux rails 2a et 2b, du côté opposé à la crémaillère 10.

Chaque levier est respectivement connecté par sa partie centrale à une unité de détection 24 par l'intermédiaire d'un premier câble électrique 23, tandis que la deuxième extrémité 25 de chaque levier est destinée à établir un contact électrique avec l'une des deux bornes terminales 26 d'un second câble électrique 27 lorsque le levier est actionné par l'ergot 16.

L'unité de détection, les deux câbles électriques et le levier forment un circuit électrique qui peut prendre deux états, dont un état dit "actif", dans lequel il est fermé, ce qui est le cas lorsque le levier est actionné, et un état dit "passif", dans lequel il est ouvert, ce qui est le cas lorsque le levier n'est pas actionné (ou au repos).

Ainsi, toute transition d'un état passif à un état actif autorise le passage d'un courant dans le circuit concerné. La circulation du courant, ou la variation de la différence de potentiel aux bornes du circuit connecté au levier est alors détectée par l'unité de détection 24 qui est alors en mesure d'avertir une unité de pilotage 40, à laquelle elle est connectée, du passage du bloc 3 devant le lieu de passage associé au levier qui se trouve momentanément dans son état actif.

De même, lorsque le premier levier 18-i passe de l'état actif à l'état passif, cela indique à l'unité de détection que le bloc vient de passer devant le second lieu de passage 48.

A chaque levier 17-i et 18-i est donc associé respectivement un circuit électrique 37-i et 38-i composé d'un premier 23 et d'un second 27 câbles électriques.

L'utilisation de deux bornes à l'extrémité de chaque câble électrique 27 permet de détecter le passage du bloc 3 quel que soit son sens de déplacement sur les rails 2.

L'unité de pilotage 40 est également connectée, d'une part, au moteur d'entraînement de la roue dentée 11, ce qui lui permet de gérer la vitesse de déplacement du bloc optique 3, et d'autre part, à une unité de gestion des disques 41.

Cette unité de gestion 41 est destinée à mémoriser les informations relatives aux deux disques, lesquelles se trouvent dans leurs tables des matières respectives, contenues dans les débuts de zones DZ des disques.

Ces tables des matières contiennent généralement le nombre de plages d'informations du disque, leurs durées respectives, et la durée totale nécessaire à la lecture complète de chaque disque.

L'unité de gestion 41 est en outre apte, d'une part, à commander à l'unité de pilotage de placer la tête de lecture 4 en regard d'une plage donnée de l'un des disques, et d'autre part, à mémoriser une suite ordonnée de plages choisies par l'utilisateur du lecteur.

L'unité de pilotage 40, l'unité de détection 24 et l'unité de gestion 41 sont logées dans le lecteur. Ces trois unités sont préférentiellement constituées de composants électroniques que l'homme de l'art peut trouver dans le commerce.

Le dispositif selon l'invention fonctionne de la façon suivante.

Lorsque le lecteur lit une plage de l'un des disques, par exemple le premier disque 5-1 qui se trouve sur le premier tourne-disque 8-1, et que l'utilisateur souhaite écouter une nouvelle plage sur le second disque 5-2, l'unité de gestion 41 interroge la mémoire dans laquelle elle stocke les tables des matières de chacun des disques chargés 5-1 et/ou 5-2.

Deux cas se présentent alors.

a) Un premier cas dans lequel la mémoire de l'unité de gestion 41 contient effectivement les tables des matières des premier et second disques 5-1 et 5-2.

Dans ce cas, l'unité de gestion 41 envoie des instructions à l'unité de pilotage 40 lui ordonnant d'arrêter le bloc 3 juste après détection, par l'unité de détection 24, du passage de ce bloc 3 devant le second lieu de passage 48 du support du disque contenant la nouvelle plage à lire. Ces instructions comprennent également le numéro de ladite plage choisie par l'utilisateur.

A réception de ces instructions indiquant un besoin de passage, par exemple, de la plage en cours de lecture sur le premier disque 5-1 à la plage choisie sur le second disque 5-2, l'unité de pilotage 40 ordonne le déplacement au bloc optique 3 en direction du second disque 5-2.

Le passage de l'ergot 16 devant le premier lieu de passage 47-2 provoque la mise en rotation du premier levier 18-2 et par conséquent la transition du circuit 38-2 de l'état passif à l'état actif. Puis, lorsque l'ergot 16 passe devant le second lieu de passage 48, il provoque le retour du premier levier 18-2 vers sa position de repos, et par conséquent la transition du circuit 38-2 de l'état actif à l'état passif. Dès que l'unité de détection 24 détecte cette dernière transition, elle avertit l'unité de pilotage 40, laquelle ordonne alors l'arrêt immédiat du bloc optique 3 qui se trouve alors positionné juste après le second lieu de passage 48.

La recherche de la plage choisie par l'usager peut commencer dès l'immobilisation du bloc 3.

La tête de lecture 4 doit tout d'abord chercher le numéro de la plage en regard de laquelle elle se trouve, puis communiquer son numéro à l'unité de pilotage 40 qui effectuera ensuite une comparaison entre ce numéro de plage et le numéro de plage choisi par l'utilisateur afin de déterminer le sens de déplacement du bloc optique 3.

Une fois la plage choisie repérée, l'unité de pilotage 40 immobilise le bloc optique 3, et la lecture de la plage d'informations choisie par l'utilisateur peut commencer.

Dans le cas des Compact Discs de 80 mm de diamètre, seuls les seconds et troisièmes leviers correspondent à des positions de la tête de lecture en regard d'une zone de lecture, le premier levier étant inutile. En conséquence, dans ce cas particulier, le bloc est positionné en regard du second lieu de passage 48 et la recherche de la plage choisie par l'usager est effectuée automatiquement en direction du centre du disque concerné. Il n'est donc pas nécessaire d'effectuer une soustraction pour connaître le sens de déplacement du bloc.

b) Un second cas existe, lorsque la table des matières du second disque 5-2 n'est pas connue de l'unité de gestion 41, ce qui peut être le cas lorsque le second disque a été installé dans le lecteur alors que celui-ci était en cours de lecture du premier disque 5-1. Il est alors nécessaire d'aller lire cette table des matières du second disque 5-2 avant de pouvoir rechercher la plage choisie par l'utilisateur. Cette lecture implique le transfert du bloc au niveau du troisième lieu de passage 49 du support du disque concerné.

Pour réaliser cette opération, l'unité de gestion 41 adresse aux moyens de pilotage 40 des instructions qui contiennent deux ordres ainsi que le numéro de la plage choisie par l'utilisateur.

Le premier ordre est un ordre pour ralentir la vitesse de déplacement du bloc optique 3 juste après détection du passage de celui-ci devant le second lieu de passage 48 du second tourne-disque 8-2 qui contient le second disque 5-2. Le second ordre est un ordre d'arrêter le bloc optique 3 juste après détection du passage de celui-ci devant le troisième lieu de passage 49-2 du second support tournant 8-2.

Ces deux ordres permettent ainsi de ralentir notablement la vitesse du bloc optique 3 avant que celui-ci n'atteigne l'extrémité des rails 2a et 2b, extrémité où se trouve une butée (non représentée sur la figure) qui entraînerait l'immobilisation brutale du bloc optique 3. Ainsi, le bloc optique 3 ne subit pas de contrainte importante lorsqu'il s'arrête au début de la zone de lecture DZ du second disque 5-2.

A réception de ces instructions indiquant un besoin de passage de la plage en cours de lecture du premier disque 5-1 à la plage choisie par l'utilisateur sur le second disque 5-2, les moyens de pilotage 40 ordonnent au bloc de se déplacer en direction du second disque 5-2. Dès que l'unité de détection 24 détecte le passage du bloc optique 3 devant le second levier à bascule 17-2 (transition du circuit 38-2 de l'état actif à l'état passif), elle avertit l'unité de pilotage 40, laquelle ordonne au moteur de la roue crantée 11 de réduire sa vitesse de rotation, ce qui permet de ralentir sur commande la vitesse de déplacement du bloc 3. Ensuite, lorsque l'unité de détection 24 détecte le passage du bloc optique 3 devant le second levier 18-2 (transition du circuit 37-2 de l'état passif à l'état actif), elle avertit de nouveau l'unité de pilotage 40, laquelle ordonne au bloc 3 de s'arrêter juste après ce second levier à bascule 17-2 afin que celui-ci puisse reprendre sa position passive.

Le second levier 17-i agit donc comme un interrupteur d'alimentation de l'unité de pilotage.

La tête de lecture 4 se trouve alors en début de zone de lecture DZ, où elle peut lire la table des matières du second disque 5-2. Après lecture de cette table des matières, la procédure de recherche de la plage choisie par l'utilisateur peut commencer. Cette procédure est celle qui est utilisée de façon connue pour l'ensemble des lecteurs commercialisés. Elle consiste à déplacer lentement le bloc optique de façon radiale de l'intérieur du disque vers l'extérieur de ce même disque jusqu'à ce que la tête de lecture détecte le début de la plage choisie par l'utilisateur.

D'autres modes de réalisation, entrant dans le cadre des revendications ci-après, peuvent être envisagés pour les moyens de détection, comme par exemple utiliser des détecteurs de position capables d'émettre un signal, de type onde électromagnétique, en direction des moyens de pilotage, en cas de détection de passage au bloc. Cela permettrai de s'affranchir des circuits électriques de couplage entre chaque détecteur et les moyens de pilotage.

Par ailleurs, on peut également envisager d'utiliser des capteurs de position de type émetteur-récepteur. Chaque capteur émettrai ainsi une onde qui serait réfléchie par le bloc de lecture et/ou d'écriture, lequel serait muni à cet effet d'un réflecteur d'ondes approprié.

De même, chaque capteur pourrait être divisé en deux parties installées respectivement en regard des faces latérales opposées du bloc. Les parties émettrices, logées en regard des moyens de guidage, émettraient des ondes qui seraient réceptionnées par des récepteurs, logés en regard des parties émettrices, de l'autre côté des moyens de guidage. En cas de passage du bloc, l'une des ondes serait interceptée, ce qui servirait de signal aux moyens de pilotage.

Enfin, le dispositif selon l'invention peut s'appliquer à d'autres lecteurs, comme par exemple les lecteurs de disques CD-ROM ou les lecteurs de disque vidéo-audio, lesquels sont capables de lire des disques d'au moins trois formats différents.

Il est également envisageable d'utiliser deux leviers à bascule au lieu du seul premier levier à bascule, pour chaque tourne-disque, mais cela nécessiterai un aménagement de la procédure décrite ci-dessus, donnée à titre d'exemple. Ainsi, le passage devant un second lieu serait détecté par une transition du circuit associé de l'état passif à l'état actif. De plus, dans cet autre mode de réalisation, il n'y aurait plus lieu de réaliser une première extrémité de forme allongée et arrondie pour chacun des deux leviers qui remplaceraient le premier levier décrit ci-dessus. De simples leviers comme le second levier décrit précédemment seraient suffisant pour détecter une telle transition ponctuelle.

## Revendications

1. Dispositif de positionnement d'un bloc optique (3) muni d'une tête de lecture et/ou d'écriture (4) d'informations sur un disque (5), du type comprenant :
- des moyens de guidage (2) solidaires d'un châssis (1) et propres à autoriser le déplacement du bloc (3) entre un premier disque (5-1) et un second disque (5-2) comprenant chacun une zone de lecture et/ou d'écriture (ZL) délimitée par un début (DZ) et une fin (FZ) de zone et respectivement positionnés au centre d'un premier (8-1) et d'un second (8-2) supports tournants, et
- des moyens de pilotage (40) propres à déplacer ledit bloc (3) sur les moyens de guidage (2) en fonction d'ordres reçus d'une unité de gestion des disques (41),
caractérisé en ce qu'il comprend des moyens de détection (16-18, 23, 24, 27, 37, 38) logés dans le châssis (1) et propres à signaler aux moyens de pilotage (40) le passage du bloc (3) en au moins un premier (47-i) et un second (48-i) lieux de passage associés respectivement au positionnement de la tête de lecture et/ou d'écriture (4) en regard sensiblement de la fin de zone (FZ) et d'une région intermédiaire (RI) de la zone de lecture et/ou d'écriture (ZL) de chaque disque, ladite région intermédiaire (RI) étant comprise entre le début et la fin de zone, et
en ce que les moyens de pilotage (40) sont aptes à faire varier la vitesse de déplacement du bloc (3) en fonction du lieu de passage détecté et d'ordres reçus de l'unité de gestion des disques (41),
ce qui permet aux moyens de pilotage (40) de minimiser le temps nécessaire au bloc de lecture et/ou d'écriture pour passer d'une plage d'informations de l'un des disques à une plage d'informations de l'autre disque.

2. Dispositif selon la revendication 1, caractérisé en ce que les moyens de détection (16-18, 23, 24, 27, 37, 38) sont propres à signaler le passage du bloc en un troisième lieu de passage (49-i) associé au positionnement de la tête de lecture (4) en regard d'une région de chaque disque, comprise entre la région intermédiaire (RI) et le début de zone (DZ) de la zone de lecture et/ou d'écriture.

3. Dispositif selon la revendication 2, caractérisé en ce que la région intermédiaire (RI) est située à une distance du centre d'un support tournant (8-i) comprise entre 34 mm et 44 mm.

4. Dispositif selon l'une des revendications 2 et 3, caractérisé en ce que la région associée au troisième lieu de passage (49-i) est le début de zone de lecture et/ou d'écriture (DZ) du disque (5-i).

5. Dispositif selon l'une des revendications 1 à 4, caractérisé en ce que les moyens de détection (16-18, 23, 24, 27, 37, 38) comprennent une pluralité de capteurs de position (17-i, 18-i) sensiblement alignés selon une droite parallèle aux moyens de guidage (2) et disposés respectivement en regard d'au moins un lieu de passage, et au moins un actionneur (16) propre à coopérer avec les capteurs de position pour permettre la détection du passage du bloc (3) devant le lieu en regard duquel il se trouve.

6. Dispositif selon la revendication 5, caractérisé en ce que les moyens de détection (16-18, 23, 24, 27, 37, 38) comprennent en outre une pluralité de circuits électriques (37-i, 38-i) chacun connectés d'une part à une unité de détection (24), elle même connectée aux moyens de pilotage (40), et d'autre part à l'un des capteurs de position (17-i, 18-i).

7. Dispositif selon la revendication 6, caractérisé en ce que les capteurs de position (17-i, 18-i) sont des leviers à bascule comportant de première (22) et seconde (25) extrémités, chaque levier formant interrupteur de l'un respectif des circuits électriques (37-i, 38-i) et étant apte à pivoter de l'une à l'autre de deux positions comprenant une position passive dans laquelle ledit levier est au repos et le circuit électrique associé est ouvert, et une position active dans laquelle le levier possède une seconde extrémité (25) en contact électrique avec une borne électrique du circuit auquel il est connecté, lequel circuit est alors fermé, et
en ce que l'actionneur (16) est un ergot formant saillie, solidaire d'une face inférieure ou latérale (15) du bloc (3), sensiblement parallèle aux moyens de guidage (2), et propre à coopérer par contact mécanique avec une première extrémité (22) d'un levier pour faire passer celui-ci de la position passive à la position active, ou inversement.

8. Dispositif selon la revendication 7, caractérisé en ce que les leviers à bascule (17-i, 18-i) sont respectivement montés à rotation libre autour d'axes (20-i) directement ou indirectement solidaires du châssis (1), et sont chacun sollicités vers la position passive par un organe de rappel (21).

9. Dispositif selon l'une des revendications précédentes, caractérisé en ce que l'unité de gestion des disques (41) est propre, en cas de connaissance du nombre de plages d'informations de chaque disque (5-i) et d'une plage choisie à lire sur un disque donné, autre que celui en cours de lecture, à adresser aux moyens de pilotage (40) des instructions leur indiquant de déplacer le bloc pour l'immobiliser juste après le second lieu de passage (48-i) du disque donné.

10. Dispositif selon la revendication 9, caractérisé en ce qu'après immobilisation du bloc juste après le second lieu de passage (48-i) du disque donné, les moyens de pilotage (40) sont aptes à commander le sens de déplacement dudit bloc (3) en fonction d'une comparaison entre le numéro de la plage du second disque (5-2) en regard de la tête de lecture et/ou d'écriture (4) et le numéro de la plage choisie, de sorte que la direction de déplacement du bloc optique puisse être déterminée en vue du positionnement de la tête de lecture et/ou d'écriture en regard de la plage choisie.

11. Dispositif selon l'une des revendications 1 à 8, caractérisé en ce que l'unité de gestion des disques (41) est propre, en cas de connaissance d'une plage choisie à lire sur un disque donné, autre que celui en cours de lecture, et de non connaissance du nombre de plages d'informations dudit disque donné, à adresser aux moyens de pilotage (40) des instructions contenant un premier ordre de ralentir la vitesse de déplacement du bloc (3) juste après détection du passage de celui-ci devant ledit second lieu de passage (48-i) du support tournant (8-i) contenant le disque donné et un second ordre d'arrêter le bloc (3) juste après détection du passage de celui-ci devant ledit troisième lieu de passage (49-i) du support tournant contenant le disque donné.

12. Dispositif selon la revendication 11, caractérisé en ce que les instructions adressées comprennent en outre le numéro de la plage choisie sur le disque donné.
